# EUROPEAN PATENT APPLICATION

(11) **EP 3 410 383 A1**
(43) Date of publication of application: **05.12.2018**
(21) Application number: 17736087.2
(22) Date of filing: 04.01.2017
(51) Int. Cl.: G06Q 50/00, G06Q 50/30, G06Q 30/02, G06K 19/06, G06Q 30/08

(54) **IMAGE-LINKED DATA MANAGEMENT SYSTEM AND METHOD THEREFOR**

(30) Priority: 04.01.2016 KR 20160000295
(71) Applicant: Nam, Ki-won, Seoul 06159 (KR)
(72) Inventor: Nam, Ki-won, Seoul 06159 (KR)
(74) Representative: Lambacher, Michael
(86) International application number: PCT/KR2017/000094
(87) International publication number: WO 2017/119714

(57) **Abstract**

The present invention relates to an image-linked data management system and method, and more specifically, to an image-linked data management system which processes and manages data in conjunction with an image in such a way that personal information of a user is inserted and stored in an area of a dot level generated when enlarging an original image, then the image is normally output in an original image state, and is selectively output by enlarging the personal information stored at a specific location of the area, and a method thereof.

## Description

### [Technical Field]

The present invention relates to an image-linked data management system and method, and more specifically, to an image-linked data management system which processes and manages data in conjunction with an image in such a way that personal information of a user is inserted and stored in an area of a dot level generated when enlarging an original image, then the image is normally output in an original image state, and is selectively output by enlarging the personal information stored at a specific location of the area, and a method thereof.

### [Background Art]

As is well known, a user often feels an urge to include his or her information in a favorite specific image. In particular, if the user may upload his or her information, such as his or her photograph, text information, and SNS information to an image of a star who the user admires, or may access such personal information, the user will feel very happy.

However, a technique that actually inserts personal information into the star's image has not been introduced in the art. Even if the personal information is simply inserted into the star's image, there is no technique or method for linking the personal information to the image by matching with each other, so as to output the image with the personal information, or manage data and realize a group community using the linked personal information.

### [Summary of Invention]

### [Problems to be Solved by Invention]

In consideration of the above-mentioned circumstances, it is an object of the present invention to provide an image-linked data management system which processes and manages data in conjunction with an image in such a way that personal information of a user is inserted and stored in an area of a dot level generated when enlarging an original image, then the image is normally output in an original image state, and is selectively output by enlarging the personal information stored at a specific location of the area, and a method thereof.

### [Means for Solving Problems]

In order to accomplish the above-described object, according to an aspect of the present invention, there is provided an image-linked data management system including: an image data interworking application 4 which is installed in a user terminal 2, and is configured to, when attempting to output personal information 16 of a user included in a star's original image 10, simultaneously receive the star's original image and the personal information 16 from an image data management server 8, and output the same on a screen of the user terminal 2; an image providing server 6 configured to receive and register a star's original image from an agency, a movie production company, or a picture shooting related company; the image data management server 8 configured to receive the star's original image from the image providing server 6, store and register the personal information 16 of the user in an area of dot units (or pixel units) forming the star's original image 10, and simultaneously transmit the star's original image and the personal information 16 of the user to the image data interworking application 4 so as to output the same on the screen of the user terminal, when requesting output by the image data interworking application 4.

Preferably, the star's original image 10 includes any one of a star picture or star daily image, movie poster, movie scene data, or broadcast scene data.

Preferably, the dot unit (or the pixel unit) has a single size determined by an image grid frame 14 having a predetermined number of rows and columns.

Preferably, the personal information 16 includes a photograph, text, or moving picture, URL information accessible to such information (the photograph, text, or moving picture), or URL information accessible to a personal communication means.

Preferably, the personal information 16 includes personal SNS information.

Preferably, the image data management server 8 processes so as to form an SNS group or chat group using a plurality of pieces of personal information selected by the users among the plurality of pieces of personal information 16 included in the same star's original image 10.

Preferably, the single size of the dot unit (or the pixel unit) is determined by an increase or decrease in the number of image grid frames 14 having a predetermined number of rows and columns.

Preferably, the image data interworking application 4 transmits a partial area enlargement request signal and a detail area selection signal to the image data management server 8 according to a selection order of the star's original images 10.

Preferably, the image data management server 8 sequentially receives a partial area enlargement request signal and a detail area selection signal for a specific star's original image 10 from the image data interworking application 4, provides data in which the partial area is automatically enlarged, and extracts the personal information matched to the detail area based on the received detail area selection signal.

Preferably, the image data management server 8 receives a specific partial area enlargement request signal and a signal for an enlargement magnification for a specific star's original image 10 received from the image data interworking application 4, such that, since the number of pieces of personal information to be included in the partial area is limited, the image data management server 8 determines whether the personal information is inserted into each partial area according to a grade of the user.

Preferably, when inputting a selection signal for a specific star's original image 10 and a request signal for enlarging a specific partial area (a body part), the image data interworking application 4 receives a grade of the user allowed to insert the personal information from the image data management server 8.

Preferably, the image data management server 8 is configured so that, when a user who desires to insert the personal information into a worn item which is worn by the star among the specific star's original images 10 has a member grade lower than another user who desires to insert the personal information into a body of the star, the user is allowed to participate in the bidding.

Preferably, the image data management server 8 is configured to sequentially display grades of the users allowed to insert the personal information into each partial area of a specific star's original image 10 by the image data interworking application 4, so as to select the user for inserting the personal information.

Preferably, the image data management server 8 provides fans with a specific star's original image 10 capable of uploading personal information during fan meeting, and when participation of the fans is completed, the image data management server 8 provides a reference link capable of directly accessing their personal information to the image data interworking application 4 of each fan.

Preferably, the image-linked data management system further includes: a set-top box management server configured to: manage set-top box information of each user so that the personal information thereof is inserted into information on a broadcast scene or movie scene in conjunction with the image data management server 8, then is selectively enlarged and output; and manage data output through a set-top box.

Preferably, the image-linked data management system further includes: a set-top box management server configured to: manage set-top box information of each user so that the personal information thereof is inserted into information on a broadcast scene or movie scene in conjunction with the image data management server 8, and the personal information is selectively enlarged and output by the image data interworking application 4; and manage data output through a set-top box.

Preferably, the image data management server 8 is configured to generate predetermined points every time when any user browses the personal information included in a specific star's original image 10, and accumulate and calculate the generated points for each user.

Preferably, the personal information 16 is replaced with advertisement information.

Preferably, when a user inputs an authentication number for visiting a movie theater, the image data management server 8 assigns the personal information 16 for a movie poster to the user.

Preferably, for same specific star's original image 10, the image data management server 8 processes the personal information so as to allow users to exchange the personal information thereof with each other, so that personal information of an original image which is provided to fans by a star includes information of the star, and personal information of an original image provided to the star by the fans includes personal information of each fan.

Preferably, the image data management server 8 processes a specific star's original image 10 so that the personal information of a specific user is distinguished better than the personal information of other users at a specific time.

Preferably, the image data interworking application 4 is operated in conjunction with a personal phone directory of the user, and the image data management server 8 recognizes whether the personal information of an acquaintance is stored in the star's original image 10 by the image data interworking application 4, by using phone number information for each individual information included in the star's original image 10, based on the telephone number of the personal information included in the star's original image 10.

Preferably, when the star's original image 10 is an offline paper image such as a newspaper, the paper image includes a QR code to be automatically connected to the image data management server 8, so as to request a provision of a digital star's original image 10 and the personal information of the user.

Preferably, a plurality of pieces of information are simultaneously stored in the personal information 16, and the stored pieces of information are sequentially output every time of clicking.

Preferably, the image data management server 8 performs a bidding to insert the personal information into each dot unit (or pixel unit) for each star's original image, and selects a successful bidder allowed to insert the personal information based on results of the bidding.

Preferably, the successful bidder is selected on the basis of an order of the highest bid amount, an order of application, or an order of the highest member grade.

Preferably, the image data management server 8 transfers each detail area (dot units or pixel units) of a specific star's original image 10 so as to insert a corporate advertisement, and performs the transfer in duplicate so as to allow the users who browse the corporate advertisement to insert the personal information thereof into the detail area.

Preferably, the image data management server 8 transfers each detail area (dot units or pixel units) of the specific star's original image 10 so as to insert the corporate advertisement, and performs the transfer in duplicate so as to allow the users who browse the corporate advertisement to insert the personal information thereof into the detail area, and the image data management server 8 selectively outputs different corporate advertisements for each country.

Preferably, the image data management server 8 is configured to manage output of the personal information according to setting whether the user is disclosed.

Preferably, for the personal information 16 of the user who requested disclosure setting, when satisfying specific enlargement exposure conditions, that is, a predetermined number of browsing signals or more are requested from other users, a predetermined number of preferences (favorites) or more are selected, the image data management server 8 enlarges the personal information 16 of the user so as to be exposed in a large size.

Preferably, the image data management server 8 registers and manages the users by dividing into a group of users who desire to be disclosed without any condition, a group of users who desire to be limitedly disclosed within a closed group, and a group of users who desire to be disclosed only to user himself/herself, according to setting whether the user is disclosed.

Preferably, the image data interworking application 4 specifies a predetermined number of pieces of personal information 16 of the user included in the star's original image 10, and the image data management server 8 outputs a chat window in which chatting of users are performed according to the specify of the predetermined number of pieces of personal information 16 of the user in conjunction with the image data interworking application 4.

Preferably, the image data interworking application 4 displays a hot key that allows the user to enlarge and output the personal information thereof with one click while outputting the star's original image 10 on the screen of the user terminal 2.

Preferably, the image data management server 8 includes: an original image registration unit 22 configured to receive and register a star picture or star daily image, movie poster, movie scene data, or broadcast scene data from the image providing server 6 which provides the star's original image 10; a personal information registration unit 24 configured to receive and register personal information for each user in order to store personal information in detail areas (dot or pixel units) generated upon enlargement of the star's original image 10; a matching information management unit 26 configured to register and manage individual personal information of the user in the detail areas for each position of the star's original image 10 by matching with each other; a dot bidding processer 30 configured to process a bidding to insert the personal information into the detail areas for each position of each star's original image 10; an application download management unit 32 configured to manage a unique identification number and a phone number of the user terminal by matching with each other so as to allow the user to download and install the image data interworking application 4 in the user terminal 2; and a controller 42 configured to register the personal information of the user in the detail areas for each position of the star's original image 10 by matching with each other, and when receiving a personal information request signal from the image data interworking application 4 of each user, extract and provide the personal information to the image data interworking application.

Preferably, the image data management server 8 further includes a member grade management unit 28 configured to assign priorities according to member grades at the time of bidding to insert the personal information into the detail areas for each position of each star's original image 10.

Preferably, the image data management server 8 further includes a phone number registration unit 29 for each image configured to register and manage phone numbers of the users for each star's original image 10 in order to confirm presence or absence of acquaintances among users who uploaded the personal information included in the same star's original image 10.

Preferably, the image data management server 8 further includes a device interworking information management unit 34 configured to, when using broadcast scene data and movie scene data as the star's original image 10, manage set-top box information of each user so that the personal information may be simultaneously output on a TV screen, and manage interworking information on a set-top box management server for managing data output through a set-top box.

Preferably, the image data management server 8 further includes a phone number-based chat window management unit 36 for each image configured to search for acquaintances who belong to the same star's original image 10 based on telephone numbers of the users so as to create a chat window.

Preferably, the image data management server 8 further includes a company dot transfer processer 38 configured to process so as to insert a corporate advertisement into the detail areas (dot or pixel units) for each position of the star's original image 10, and insert the personal information of the user into the detail areas when browsing the corporate advertisement by the user.

Preferably, the image data management server 8 further includes a selective personal information disclosure processer 40 configured to disclose the personal information of the user to all subjects without any condition, only to subjects within a closed group, or only to user himself/herself, according to disclosure setting of the user.

Preferably, the company dot transfer processer 38 performs a transfer in duplicate for the same detail areas (dot or pixel units) of the same star's original image 10.

Preferably, when the star's original image 10 is an image of a bride and groom, the image data management server 8 generates a unique identification code for the image of the bride and groom, and generates a plurality of detail area codes to be included in the image of the bride and groom, so that the guests or the bride and groom insert personal information of the guests into the image of the bride and groom using the generated unique identification codes.

According to another aspect of the present invention, there is provided an image-linked data management method including the steps of: a) receiving a selection signal of a specific star's original image 10 from an image data interworking application 4 specified by an image data management server 8; b) receiving a specific detail area selection signal from the image data interworking application 4 by the image data management server 8; c) extracting personal information of a user matched to a detail area by the image data management server 8; d) transmitting the extracted personal information to the image data interworking application 4 by the image data management server 8; and e) outputting the personal information transmitted to the image data interworking application 4 on a screen of a user terminal together with the star's original image 10.

Preferably, the image-linked data management method further includes the steps of: before step a), f) receiving and registering, by the image data management server 8, personal information 16 for each user transmitted from a user terminal 2; g) receiving, by the image data management server 8, a personal information insertion request signal for a specific detail area of the specific star's original image 10 from the image data interworking application 4 installed in the user terminal 2; h) determining, by the image data management server 8, whether the personal information of the user can be inserted into the detail area; and i) inserting, by the image data management server 8, the personal information 16 of the user into the detail area at a predetermined position thereof within the star's original image 10.

Preferably, the image-linked data management method further includes the step of: before step a), registering, by the image data management server 8, a telephone number of the user by matching with each personal information belonging to each star's original image 10.

Preferably, the image-linked data management method further includes the steps of: between step a) and step b), selecting a predetermined partial area 12 of the star's original image 10 by the user using the image data interworking application; and automatically enlarging, by the image data management server 8, the partial area and providing the enlarged information to the image data interworking application 4.

Preferably, the image-linked data management method further includes the steps of: in step b), selecting a plurality of pieces of personal information 16 of different users by any one user; and when requesting a chat, calling each image data interworking application 4 of the users to provide a chat window, by the image data management server 8.

Preferably, in step e), when the personal information is URL information, the image data interworking application 4 outputs information connected to a URL on the screen of the user.

Preferably, the image-linked data management method further includes the steps of: after step e), when receiving a request signal for confirming presence or absence of acquaintances of the specific star's original image 10 from the image data interworking application 4, comparing, by the image data management server 8, the telephone numbers registered in a telephone directory of the users with the telephone numbers of the users present in each personal information included in the star's original image 10 by communicating with the image data interworking application 4; and if there is a matched telephone number, transmitting, by the image data management server 8, telephone number information and the personal information matched to the telephone number to the image data interworking application 4.

Preferably, the image-linked data management method further includes the steps of: in step a), when the star's original image 10 is an image printed on a paper, obtaining a QR code printed on the paper by the image data interworking application 4; and transmitting QR code information to the image data management server 8 by the image data interworking application 4.

Preferably, the image-linked data management method further includes the steps of: before step a), j) receiving, by the image data management server 8, a request signal for disclosing the personal information of the user to all subjects, only to subjects within a closed group, or only to user himself/herself from the user; and k) registering setting information of disclosure for each user by the image data management server 8, the step c) further includes the step of: I) determining, by the image data management server 8, whether the personal information of the user is disclosed based on a personal information selection signal received from the image data interworking application 4.

Preferably, the image-linked data management method further includes the steps of: in step f), when the star's original image 10 is an image including a first user, and the personal information of a user who requested to be registered by the image data management server 8 is personal information of a second user, assigning unique identification codes to the star's original image 10 and each detail area forming the star's original image 10, by the image data management server 8; transmitting, by the image data management server 8, the unique identification codes of the respective detail areas to the image data interworking applications 4 of a plurality of the second, third, fourth, ... and Nth users; receiving, by the image data management server 8, their personal information of the users and the unique identification codes assigned thereto through the image data interworking application 4.

Receiving, by the image data management server 8, the personal information of the user from the image data interworking application 4 of the first user; and simultaneously inputting, by the image data management server 8, the personal information of the first user and the personal information of any other user into the detail areas.

Preferably, the image-linked data management method further includes the step of: in step f), when the personal information of the user who requested to be registered is a plurality of different pieces of personal information of the same user, processing, by the image data management server 8, so as to sequentially output the plurality of pieces of personal information of the user every time of clicking.

Preferably, step h) further includes the steps of: providing, by the image data management server 8, bidding conditions (an order of the highest bid amount, an order of application, or an order of the highest member grade) to insert the personal information into each detail area to the image data interworking application 4; receiving, by the image data management server 8, a signal for bidding from the image data interworking application 4; and determining, by the image data management server 8, individual information of the user to be inserted into each detail area.

Preferably, the image-linked data management method further includes the steps of: in step f), when the personal information registered in the image data management server 8 is company information and transfer in duplication for individual user is set at the time of browsing the company information, receiving, by the image data management server 8, a corporate information browsing signal from any one of the image data interworking applications 4; inserting, by the image data management server 8, the personal information of the user into the company information, and providing the company information to other users so as to browse the company information; receiving, by the image data management server 8, a browsing signal for same company information from any one of the image data interworking applications 4; and inserting, by the image data management server 8, the personal information of the user into the same company information, and providing the same company information to other users so as to browse the company information; 56.

Preferably, the image-linked data management method further includes the steps of: in step f), if the star's original image 10 to be registered the personal information is broadcast scene information or movie scene information, when registering set-top box information by a user who registered personal information in the broadcast scene information or movie scene information, receiving, by the image data management server 8, a signal indicating that a broadcast scene or movie scene is output on a TV screen from a set-top box management server; transmitting, by the image data management server 8, the personal information of the user to the set-top box management server; and outputting personal information on the TV screen together with the broadcast scene or movie scene by the set-top box management server.

Preferably, step f) further includes the step of: when attempting registration of the personal information, allowing, by the image data management server 8, the user to register the personal information thereof when inputting a ticket number after viewing a specific movie.

Preferably, the image-linked data management method further includes the steps of: when enlarging or reducing a partial area 12, calculating, by the image data management server 8, an increase or decrease of the number of pieces of personal information storable in the partial area; and providing, by the image data management server 8, the number of pieces of personal information that can be stored in the partial area 12 according to the magnification thereof to the image data interworking application 4.

### [Advantageous Effects]

The system according to the present invention is a good tool for collecting personal information, which may allow a user to utilize the star's image, and provide a cyber space for aggregating fans of the star, and a very advantageous tool which may provide a one-to-many excellent community between bride and groom and guests, for example, as well as distribute and consume various media and promote media such as movies and albums, while serving as a new advertisement consumption tool and a new SNS.

### [Description of Drawings]

FIG. 1 is a block diagram illustrating a schematic configuration of an image-linked data management system according to an embodiment of the present invention.
FIG. 2 is an exemplary diagram illustrating a state in which a part of an area is enlarged through the image-linked data management system according to the embodiment of the present invention.
FIG. 3 is an exemplary diagram illustrating a state in which personal information is output through the image-linked data management system according to the embodiment of the present invention.
FIG. 4 is a diagram illustrating a state of dividing an original image through the image-linked data management system according to the embodiment of the present invention.
FIG. 5 is a diagram illustrating a state in which an original image and personal information are simultaneously output through the image-linked data management system according to the embodiment of the present invention.
FIG. 6 is a block diagram illustrating a configuration of an image data management server included in the image-linked data management system according to the embodiment of the present invention.
FIG. 7 is a diagram illustrating a state in which bidding is performed for each image portion through the image-linked data management system according to the embodiment of the present invention.
FIG. 8 is a diagram illustrating a state in which a community tool is formed on the basis of personal information such as a telephone number included in a specific original image through the image-linked data management system according to the embodiment of the present invention.
FIG. 9 is a diagram illustrating a state of browsing an advertisement, and registering and transferring the personal information through the image-linked data management system according to the embodiment of the present invention.

### [Mode for Carrying out Invention]

Hereinafter, the present invention will be described in detail with reference to the accompanying drawings.

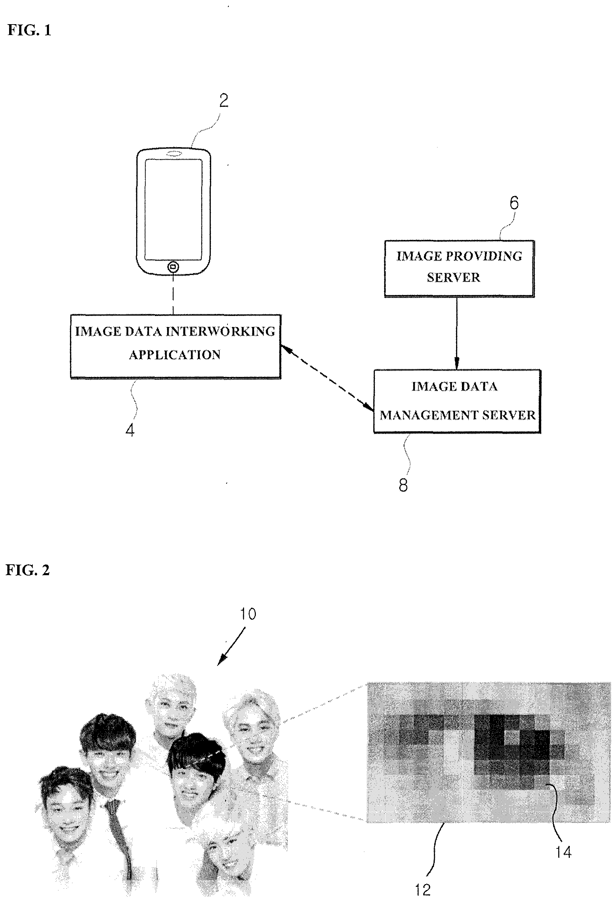

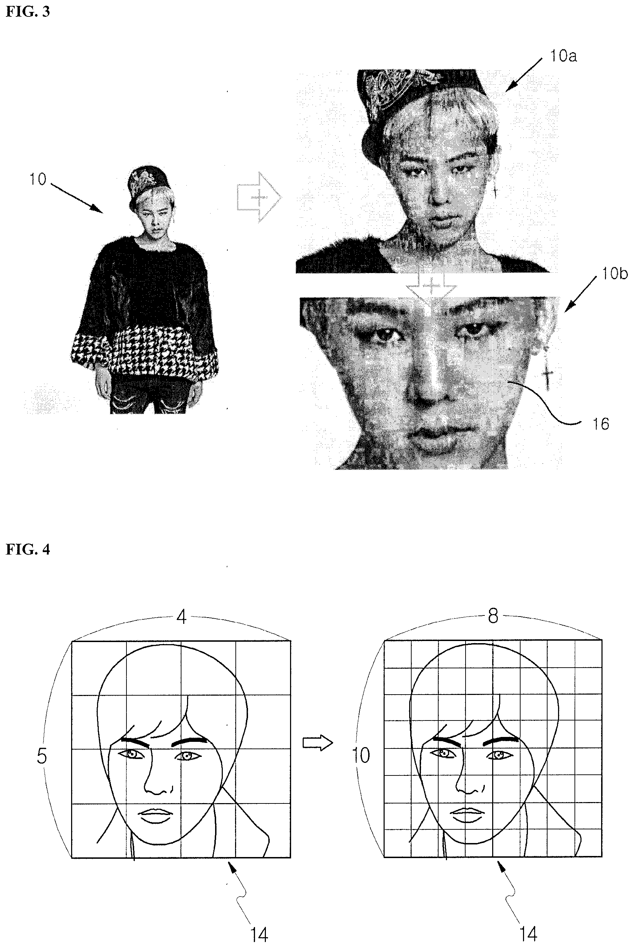

FIG. 1 is a block diagram illustrating a schematic configuration of an image-linked data management system according to an embodiment of the present invention, FIG. 2 is an exemplary diagram illustrating a state in which a part of an area is enlarged through the image-linked data management system according to the embodiment of the present invention, FIG. 3 is an exemplary diagram illustrating a state in which personal information is output through the image-linked data management system according to the embodiment of the present invention, and FIG. 4 is a diagram illustrating a state of dividing an original image through the image-linked data management system according to the embodiment of the present invention.

Referring to FIGS. 1 to 4, the image-linked data management system according to the embodiment of the present invention is a system which processes and manages data in conjunction with an image in such a way that personal information of a user is inserted and stored in an area of a dot level generated when enlarging an original image, then the image is normally output in an original image state, and is selectively output by enlarging the personal information stored at a specific location of the area, and a method thereof.

More specifically, the image-linked data management system according to the embodiment of the present invention includes: an image data interworking application 4 which is installed in a user terminal 2, and is configured to, when attempting to output personal information 16 of a user included in a star's original image 10, simultaneously receive the star's original image and the personal information 16 from an image data management server 8, and output the same on a screen of the user terminal 2; an image providing server 6 configured to receive and register a star's original image from an agency, a movie production company, or a picture shooting related company; the image data management server 8 configured to receive the star's original image from the image providing server 6, store and register the personal information 16 of the user in an area of a dot unit (or a pixel unit) forming the star's original image 10, and simultaneously transmit the star's original image and the personal information 16 of the user to the image data interworking application 4 so as to output the same on the screen of the user terminal, when requesting output by the image data interworking application 4.

In short, the image-linked data management system according to the embodiment of the present invention stores the personal information of a plurality of users in a space of a dot or a pixel unit within a digital-based image of the star. Therefore, it is possible to output different types of data through expansion and reduction of the star's image. In particular, when a user who stores personal information is a fan of the star, three is an additional effect of providing a substantial bond and a sense of unity among the fans.

At this time, the star's original image 10 includes any one of a star's picture, star's daily image, movie poster, movie scene data, and broadcast scene data. The star's original image 10 is not limited to the star as a subject. For example, a bride and groom may be the subject of an original image at a wedding hall where one or more one-to-many communities are temporarily formed. When the bride and groom provide the original image, the personal information inserted into the original image may be personal information of guests.

When enlarging the image, the personal information may be inserted and stored in a detail area which is naturally divided by a boundary of the pixel units, or in a detail area in which a boundary of the dot units is artificially formed.

Accordingly, the dot unit (or the pixel unit) has a single size determined by an image grid frame 14 having a predetermined number of rows and columns, as illustrated in FIG. 2.

That is, the single size of the dot unit (or the pixel unit) is determined by an increase or decrease in the number of image grid frames 14 having a predetermined number of rows and columns.

For example, as illustrated in FIG. 2, if enlarging the star's original image 10, the number of image grid frames 14 is increased, such that the number of detail areas capable of having the personal information inserted therein is increased.

The personal information 16 includes a photograph, text, or moving picture, URL information accessible to such information (the photograph, text, or moving picture), or URL information accessible to a personal communication means.

The personal information 16 may include a support message for the star or words of blessing to the bride and groom. In addition, the personal information 16 may include personal SNS information.

At this time, the user may easily extract and enlarge his or her personal information 16 included in a specific star's original image 10 through the image data interworking application 4. To this end, a reference link is set in the personal information of the user.

The image data management server 8 has modification information of each detail area according to the size enlargement magnification for each star's original image 10, for example, operation information on how many pieces of individual information are stored.

Accordingly, the image data interworking application 4 may transmit a partial area enlargement request signal and a detail area selection signal to the image data management server 8 according to a selection order of the star's original images 10.

The image data management server 8 sequentially receives the partial area enlargement request signal and the detail area selection signal for the specific star's original image 10 from the image data interworking application 4, provides data in which the partial area is automatically enlarged, extracts the personal information matched to the detail area based on the received detail area selection signal, and transmits the extracted personal information to the image data interworking application 4 again.

The present system may replace the personal information with advertising information in conjunction with a reward system. Therefore, the image data management server 8 is configured to generate predetermined points every time when any user browses the personal information included in the specific star's original image 10, and accumulate and calculate the generated points for each user.

Meanwhile, the image-linked data management system according to the embodiment of the present invention may promote a new movie or album, and may obtain a large promotional effect at low costs. For example, when a user inputs an authentication number for visiting a movie theater, the image data management server 8 may assign the personal information 16 for the movie poster to the user.

In addition, the image-linked data management system according to the embodiment of the present invention allows the users to respectively register personal information to exchange with each other, and may also provide the personal information to the users. To this end, for the same specific star's original image 10, the image data management server 8 processes the personal information so as to allow the users to exchange the personal information thereof with each other, so that personal information of an original image which is provided to the fans by the star includes information of the star, and personal information of an original image provided to the star by the fans includes personal information of each fan.

Further, the image data management server 8 may process the specific star's original image 10 so that the personal information of a specific user may be distinguished better than the personal information of other users at a specific time.

At this time, a plurality of users may share the personal information included in the same star's original image 10 through the image data interworking application 4. After a certain period of time, the specific personal information may be enlarged and displayed in a larger size for a certain period of time. To this end, the image data management server 8 may apply the star's original image 10 to the user terminal 2 through the image data interworking application 4 and output the same thereon.

Meanwhile, even if the star's original image 10 is an offline paper image such as a newspaper, the image-linked data management system according to the embodiment of the present invention may include personal information of the user in the paper image.

To this end, the paper image may include a QR code capable of being automatically connected to the image data management server 8, so as to request a provision of a digital star's original image 10 and the personal information of the user. The user operates a camera (not illustrated) of the user terminal 2 to photograph the QR code, and transmits the photographed QR code to the image data management server 8 through the image data interworking application 4.

Similarly, the image data management server 8 may transmit the digital star's original image 10 to the image data interworking application 4. The user may request the image data management server 8 so as to output any personal information on the screen.

In addition, the image-linked data management system according to the embodiment of the present invention may be configured to simultaneously store a plurality of pieces of information in the personal information 16 included in the star's original image 10, and sequentially output the stored pieces of information every time of clicking.

The image data management server 8 manages data on personal information. The user may register a plurality of pieces of personal information in the image data management server 8 and sequentially request output of each of the pieces of personal information.

Meanwhile, according to the image-linked data management system according to the embodiment of the present invention, even if the user has registered his or her personal information in the star's original image 10, the user may set whether the user's own personal information is disclosed and a level of the disclosed personal information.

Therefore, the image data management server 8 is configured to manage the output of the personal information according to the setting whether the user is disclosed ('disclosure setting').

More specifically, for the personal information 16 of the user who requested the disclosure setting, when satisfying specific enlargement exposure conditions, that is, a predetermined number of browsing signals or more are requested from other users, a predetermined number of preferences (likes) or more are selected or randomly exposed, the image data management server 8 enlarges the personal information 16 of the user so as to be exposed in a large size.

In addition, the image data management server 8 registers and manages the users by dividing into a group of users who desire to be disclosed without any condition, a group of users who desire to be limitedly disclosed within a closed group, and a group of users who do not desire to be disclosed to other persons, that is, desire to be disclosed only to the user himself/herself, according to the disclosure setting of the user.

At this time, in a case of the group of users who desire to be limitedly disclosed within a closed group, it is possible to disclose the personal information thereof only to acquaintances stored in a personal telephone directory of the users, for example.

To this end, unique identification information of the image data interworking application 4 assigned to each user should be registered and managed in the image data management server 8 in conjunction with the telephone number of an owner of the image data interworking application.

Since the image data interworking application 4 has the unique identification code assigned thereto, the image data management server 8 may identify the owner of the image data interworking application using the unique identification code. The reference link is set in the personal information 16 included in the star's original image 10 so as to match with the unique identification code for the image data interworking application 4.

Accordingly, the image data interworking application 4 may display a hot key that allows the user to enlarge and output the personal information thereof with one click while outputting the star's original image 10 on the screen of the user terminal 2. The user may immediately output his or her personal information on the same screen by using the hot key.

Meanwhile, the image-linked data management system according to the embodiment of the present invention configured as described above functions and operates as follows.

First, the image data management server 8 receives and registers personal information 16 for each user transmitted from the user terminal 2.

In this state, the user scans a plurality of star's original images 10, and then drives the image data interworking application 4 to generate a request signal in order to insert personal information into the specific star's original image 10.

Next, the image data management server 8 receives a personal information insertion request signal for a specific detail area of the specific star's original image 10 from the image data interworking application 4 installed in the user terminal 2.

In this state, the image data management server 8 determines whether the personal information of the user can be inserted into the original image. Then, the image data management server 8 inserts the personal information of the user 16 at a predetermined position of the detail area within the star's original image 10.

At this time, it is preferable that the image data management server 8 registers each personal information inserted in each star's original image 10 by matching the phone number of the user.

Meanwhile, at the time of enlarging or reducing a part of the star's original image 10, in particular, a partial area 12 as illustrated in FIG. 2, the image data management server 8 may further include the step of calculating the increased or decreased number of pieces of personal information storable in the partial area, and providing the number of pieces of storable personal information according to the enlargement magnification of the partial area 12 to the image data interworking application 4.

That is, as illustrated in FIG. 3, an image 10b obtained at the time of second enlargement may accommodate more personal information than an image 10a obtained at the time of first enlargement.

Meanwhile, as illustrated in FIG. 4, although the size of the star's original image 10 is fixed, when the number of matrices of the image grid frame 14 is increased, the number of pieces of acceptable personal information is also increased.

Meanwhile, according to the present invention, the image data management server 8 receives a request signal for disclosure of personal information to all the subjects, limited disclosure of the personal information to the closed group, or non-disclosure from the user, and registers and manages information on the disclosure setting for each user.

In this state, the image data management server 8 receives a selection signal of the specific star's original image 10 from the image data interworking application 4 of a specific user.

Preferably, the user selects a predetermined partial area 12 of the star's original image 10 through the image data interworking application 4. Then, the selection signal is automatically transmitted to the image data management server 8.

Thereafter, the image data management server 8 automatically enlarges the partial area and provides information on the enlarged partial area to the image data interworking application 4.

At this time, in a state in which the star's original image 10 is displayed on the screen, the user selects a specific detail area and browses specific personal information.

Then, the image data management server 8 receives the selection signal of the user for the specific detail area from the image data interworking application 4.

Thereby, the image data management server 8 extracts the personal information matched to the detail area, and transmits the extracted personal information to the image data interworking application 4.

At this time, the image data management server 8 determines whether the personal information is disclosed on the basis of the selection signal of the personal information received from the image data interworking application 4.

When a user who uploaded the personal information sets that the personal information thereof is disclosed to a group of the closed subjects (based on the telephone directory) through disclosure setting information, the image data management server 8 determines that any user when attempting to browse the personal information is the user stored in the telephone directory of the user who uploaded the personal information, and transmits the personal information according to the results of determination.

Then, the personal information received by the image data interworking application 4 is output on the same screen together with the star's original image 10.

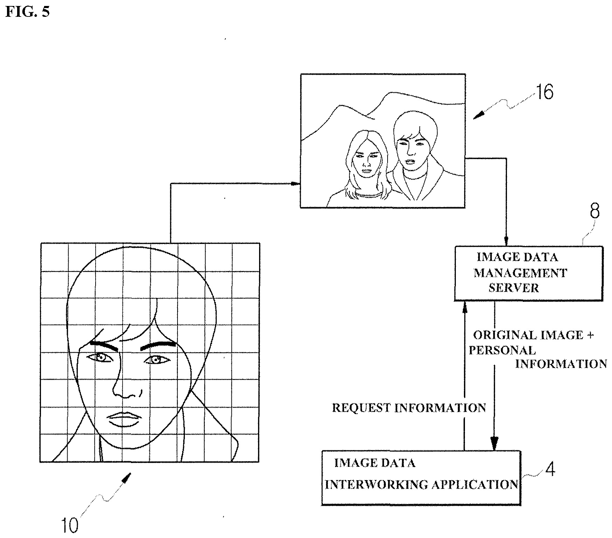

FIG. 5 is a diagram illustrating a state in which an original image and personal information are simultaneously output through the image-linked data management system according to the embodiment of the present invention.

Referring to FIG. 5, the image-linked data management system according to the embodiment of the present invention may utilize the star's original image 10 as a means for communicating with the fans at the time of a fan meeting.

That is, at the time of the fan meeting, the image data management server 8 provides the fans with a specific star's original image 10 capable of uploading personal information.

In this state, when the participation of the fans is completed, the image data management server 8 provides a reference link capable of directly accessing their personal information to the image data interworking application 4 of each fan.

Then, the fans may output their own personal information on the screen in a state in which the star's original image 10 is output on the same screen through the image data interworking application 4.

Meanwhile, when outputting a broadcast scene or movie scene on a TV or the user terminal 2, the image-linked data management system according to the embodiment of the present invention may control so that the personal information 16 of the user who is an owner of the TV or the user terminal 2 is simultaneously output on the same screen.

To this end, the image-linked data management system according to the embodiment of the present invention may further include a set-top box management server configured to: manage set-top box information of each user so that the personal information thereof is inserted into information on the broadcast scene or movie scene in conjunction with the image data management server 8, then is selectively enlarged and output; and manage data output through the set-top box.

That is, when the image data management server 8 recognizes that the broadcast scene or drama scene including the personal information of the user is output on the TV or the user terminal 2 in conjunction with a broadcast company server and the set-top box management server, the image data management server 8 transmits the personal information 16 of the user to the set-top box management server, thus to output the personal information 16 through the set-top box.

If a means for outputting the broadcast scene or drama scene is the user terminal, the image data management server 8 transmits the personal information of the user to the image data interworking application 4 at the time of outputting the broadcast scene or drama scene in conjunction with the broadcaster server so as to be output on the screen.

In addition, the image-linked data management system according to the embodiment of the present invention further includes the set-top box management server configured to: manage set-top box information of each user so that the personal information thereof is inserted into information on the broadcast scene or movie scene in conjunction with the image data management server 8, and the personal information is selectively enlarged and output by the image data interworking application 4; and manage data output through the set-top box.

That is, when the image data management server 8 recognizes that the broadcast scene or drama scene including the personal information of the user is output on the TV or the user terminal 2 in conjunction with the broadcast company server or the set-top box management server, the image data management server 8 transmits the personal information 16 of the user to the set-top box management server so as to output the personal information 16 through the set-top box. At this time, location information of the user terminal 2 may be determined by a GPS server or using a WIFI method, such that the personal information of the user can be limitedly exposed on the screen only when the user is located near the set-top box.

Meanwhile, the star's original image 10 distributed through the image-linked data management system according to the embodiment of the present invention is not limited to the star. Subjects such as a bride and groom at a wedding hall where a large number of communities are temporarily formed may also provide the original image.

That is, when the star's original image 10 is an image of the bride and groom, the image data management server 8 generates a unique identification code for the image of the bride and groom, and generates a plurality of detail area codes to be included in the image of the bride and groom, so that the guests or the bride and groom can insert the personal information of the guests into the image of the bride and groom using the generated unique identification codes.

First, since the bride and groom and the guests are different from each other, the image data management server 8 may notify the guests of the unique identification code for the image of the bride and groom. Alternatively, the unique identification code for the image of the bride and groom may be notified to the guests by printing or writing an identification code on a back side of a paper such as a meal ticket.

Meanwhile, when the bride and groom know the phone numbers of the guests, the guests may not know the unique identification code for the image of the bride and groom. The reason is that, the bride and groom may transmit their images to the image data interworking application 4 of each guest through the image data management server 8.

More specifically, when receiving a request signal for uploading personal information, the image data management server 8 needs to determine which image of the bride and groom. Therefore, when requesting an upload of the personal information, the user has to input the unique identification code for the image of the bride and groom through the image data interworking application 4.

Likewise, the image data management server 8 needs to determine whether the personal information of the user should be inserted into any detail area within the image of the bride and groom. Therefore, the user has to input the previously assigned code for the detail area through the image data interworking application 4.

Then, the image data management server 8 may store the personal information of a plurality of guests so as to form the image of the bride and groom. The bride and groom may check the personal information of the guests and confirm what type of words of blessing are saved and who visited the wedding.

Therefore, the image of the bride and groom may also function as a guestbook on which the personal information of the guests is stored.

Meanwhile, the image of the bride and groom may also have the function of allowing the guests to write individual greetings on the personal information of the bride and groom.

In other words, the bride and groom may browse the personal information on which the individual greetings of the guests are written in each detail area, thus to check which guests have visited the wedding.

Similarly, the bride and groom may write greetings for the guests so as to match with their personal information through the image data interworking application 4.

This is possible because a plurality of pieces of personal information may be registered in the detail area by matching.

In summary, when the star's original image 10 is an image including a first user, and the personal information of a user who requested to be registered by the image data management server 8 is personal information of a second user, the image data management server 8 assigns unique identification codes to the star's original image 10 and each detail area forming the star's original image 10, respectively.

Then, the image data management server 8 transmits the unique identification codes of the respective detail areas to the image data interworking applications 4 of a plurality of the second, third, fourth, ... and Nth users.

Then, each user receives his or her personal information and the unique identification code assigned to him or her through the image data interworking application 4, by the image data management server 8.

The image data management server 8 receives the personal information of the user from the image data interworking application 4 of the first user.

The image data management server 8 allows the users to simultaneously input the personal information of the first user and the personal information of any other user into the detail area to form a community among the users.

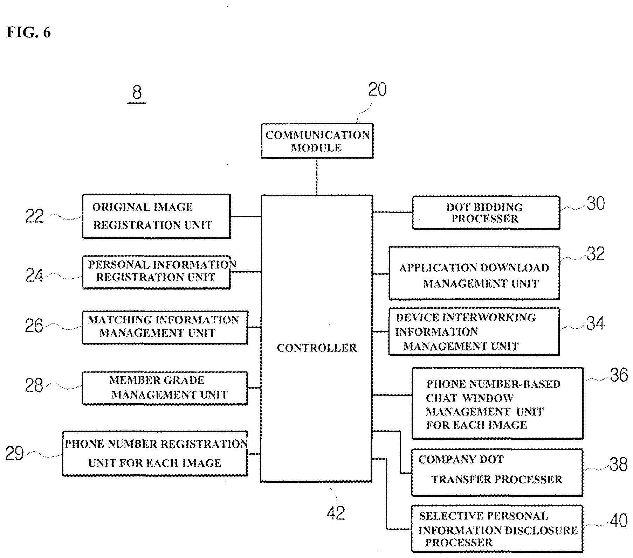

FIG. 6 is a block diagram illustrating a configuration of an image data management server included in the image-linked data management system according to the embodiment of the present invention.

Referring to FIG. 6, the image data management server 8 included in the image-linked data management system according to the embodiment of the present invention includes: an original image registration unit 22 configured to receive and register a star picture or star daily image, movie poster, movie scene data, or broadcast scene data from the image providing server 6 which provides the star's original image 10; and a personal information registration unit 24 configured to receive and register personal information for each user in order to store personal information in detail areas (dot or pixel units) generated upon enlargement of the star's original image 10.

In addition, the image data management server 8 included in the image-linked data management system according to the embodiment of the present invention includes: a matching information management unit 26 configured to register and manage the individual personal information of the user in the detail areas for each position of the star's original image 10 by matching with each other; and a dot bidding processer 30 configured to process a bidding to insert the personal information into the detail areas for each position of each star's original image 10.

In addition, the image data management server 8 included in the image-linked data management system according to the embodiment of the present invention includes: an application download management unit 32 configured to manage a unique identification number and a phone number of the user terminal by matching with each other so as to allow the user to download and install the image data interworking application 4 in the user terminal 2; and a controller 42 configured to register the personal information of the user in the detail areas for each position of the star's original image 10 by matching with each other, and when receiving a personal information request signal from the image data interworking application 4 of each user, extract and provide the personal information to the image data interworking application.

Meanwhile, the image data management server 8 further includes a member grade management unit 28 configured to assign priorities according to member grades at the time of bidding to insert the personal information into the detail areas for each position of each star's original image 10.

The members are classified into different grades according to a click rate, the number of times of uploading of personal information, and a preference (for example, the number of 'likes') for personal information of third parties, and the member grade management unit 28 manages the member grades.

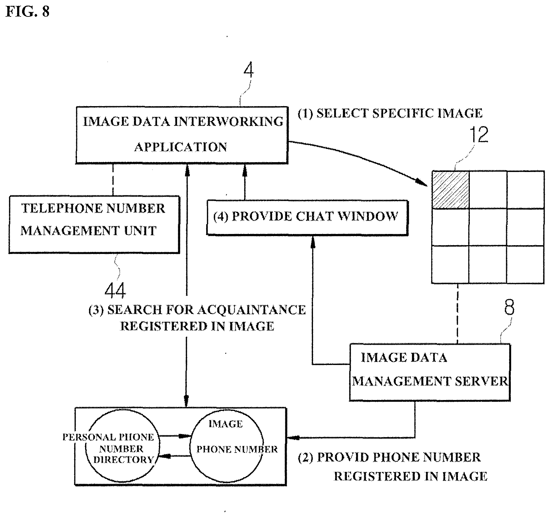

The image data management server 8 further includes a phone number registration unit 29 for each image configured to register and manage phone numbers of the users for each star's original image 10 in order to confirm presence or absence of acquaintances among users who uploaded the personal information included in the same star's original image 10, which will be described in detail with reference to FIG. 8.

The image data management server 8 further includes: a device interworking information management unit 34 configured to, when using the broadcast scene data and movie scene data as the star's original image 10, manage the set-top box information of each user so that the personal information may be simultaneously output on a TV screen, and manage interworking information on the set-top box management server for managing data output through the set-top box; and a phone number-based chat window management unit 36 for each image configured to search for acquaintances who belong to the same star's original image 10 based on the telephone numbers of the users so as to create a chat window.

Meanwhile, the image data management server 8 further includes: a company dot transfer processer 38 configured to process so as to insert a corporate advertisement into the detail areas (dot or pixel units) for each position of the star's original image 10, and insert the personal information of the user into the detail areas when browsing the corporate advertisement by the user; and a selective personal information disclosure processer 40 configured to disclose the personal information of the user to all subjects without any condition, only to subjects within a closed group, or only to user himself/herself, according to the disclosure setting of the user.

At this time, the company dot transfer processer 38 performs a transfer in duplicate for the same detail areas (dot or pixel units) of the same star's original image 10.

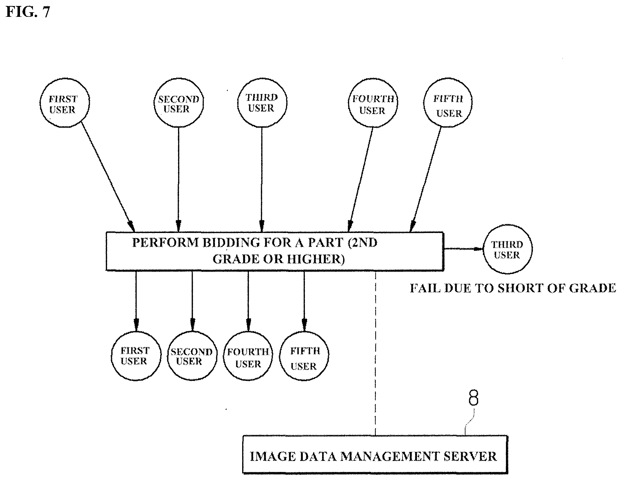

FIG. 7 is a diagram illustrating a state in which bidding is performed for each image portion through the image-linked data management system according to the embodiment of the present invention.

Referring to FIG. 7, according to the image-linked data management system according to the embodiment of the present invention, basically, it is not possible for any user to insert his or her personal information into all desired body parts (or the detail areas) for the star's original image 10 as desired.

Thus, basically, the image-linked data management system according to the embodiment of the present invention is based on a competition structure in which a user wants to insert his or her personal information into the detail areas at a desired position of a desired star image.

Meanwhile, the image data management server 8 receives a specific partial area enlargement request signal and a signal for the enlargement magnification for the specific star's original image 10 received from the image data interworking application 4. At this time, since the number of pieces of personal information that can be included in the partial area is limited, the image data management server 8 determines whether the personal information can be inserted into each partial area according to a grade of the user based on the received signals.

That is, first, as the star's original image 10 is enlarged, more personal information can be inserted due to the increased number of detail areas. However, as a result, the number of spaces that can have the personal information inserted therein is increased to a predetermined number, such that the personal information is limitedly inserted within the predetermined number.

Accordingly, a successful bidder allowed to insert the personal information may be selected on the basis of an order of the highest bid amount, an order of application, or an order of the highest member grade.

To this end, the image data management server 8 may calculate the number of detail areas that can store the personal information for each position or body part of the star's original image 10, and provide the calculation result to the image data interworking application 4.

Accordingly, when inputting the selection signal for the specific star's original image 10 and a request signal for enlarging a specific partial area (a body part), the image data interworking application 4 receives the grade of the user allowed to insert the personal information from the image data management server 8.

Of course, the image data management server 8 is configured so that, when a user who desires to insert the personal information into a worn item which is worn by the star among the specific star's original images 10 has a member grade lower than another user who desires to insert the personal information into a body of the star, the user can participate in the bidding.

Thereby, the image data management server 8 performs a bidding to insert the personal information into each dot unit (or pixel unit) for each star's original image, and selects a successful bidder allowed to insert the personal information based on the bidding result.

As described above, the image data management server 8 may further include the member grade management unit 28 configured to assign priorities according to member grades at the time of bidding to insert the personal information into the detail areas for each position of each star's original image 10.

The members may be classified into different grades according to a click rate, the number of times of uploading of personal information, and a preference (for example, the number of 'likes') for personal information of third parties, and the member grade management unit 28 may manage the member grades.

Meanwhile, according to the present invention, it is possible to select a specific movie viewing as an option upon when attempting to register the personal information. If inputting a ticket number after viewing the specific movie, the image data management server 8 may process so as to allow the user to register the personal information.

FIG. 8 is a diagram illustrating a state in which a community tool is formed on the basis of personal information such as a telephone number included in a specific original image through the image-linked data management system according to the embodiment of the present invention.

Referring to FIG. 8, the image-linked data management system according to the embodiment of the present invention may form a separate and temporary new community using the star's original image 10, and a plurality of pieces of personal information included in the star's original image 10.

At this time, the image data management server 8 may be processed so as to sequentially output the plurality of pieces of personal information selected by the user among the plurality of different pieces of personal information of the users who are requested to register the same every time of clicking.

Therefore, the image data management server 8 may process so as to form an SNS group or chat group using a plurality of pieces of personal information selected by the users among the plurality of pieces of personal information 16 included in the same star's original image 10.

In summary, the user may request the image data management server 8 to open the chat window by selecting some pieces of information among the plurality of pieces of personal information 16 included in the star's original image 10, and may perform text chat or voice chat with other users through the chat window.

In addition, the image-linked data management system according to the embodiment of the present invention may determine whether the personal information included in the star's original image 10 includes personal information of the acquaintance.

To this end, the image data interworking application 4 is operated in conjunction with a personal phone directory of the user, and the image data management server 8 may recognize whether the personal information of the acquaintance is stored in the star's original image 10 by the image data interworking application 4, by using phone number information for each individual information included in the star's original image 10, based on the telephone number of the personal information included in the star's original image 10.

At this time, the image data interworking application 4 further includes a telephone number management unit 44 configured to extract and transmit the telephone number in conjunction with the telephone directory.

More specifically, when receiving a request signal for confirming whether the personal information of the acquaintance exists in the specific star's original image 10 from the image data interworking application 4, the image data management server 8 compares the telephone numbers registered in the personal telephone directory of the user with the telephone numbers present in each personal information included in the star's original image 10, by communicating with the image data interworking application 4.

If there is a matched telephone number, the image data management server 8 transmits the telephone number information and the personal information matched to the telephone number to the image data interworking application 4.

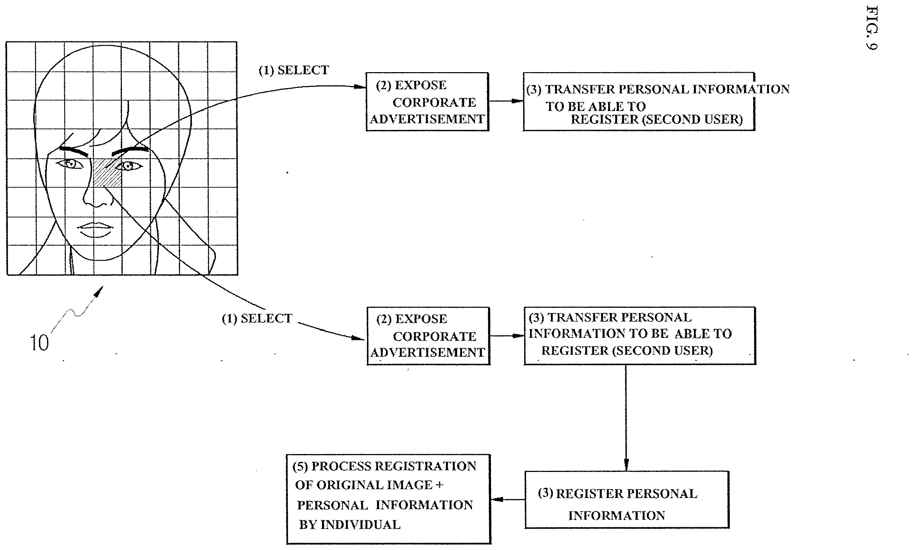

FIG. 9 is a diagram illustrating a state of browsing an advertisement, and registering and transferring the personal information through the image-linked data management system according to the embodiment of the present invention.

Referring to FIG. 9, the image-linked data management system according to the embodiment of the present invention may be awarded a predetermined number of detail areas among the plurality of detail areas forming the star's original image, and insert the corporate advertisement into the details, as well as transfer the detail areas into which the corporate advertisement is inserted as a browsing reward for a user who browses the corporate advertisement.

At this time, the detail areas may be transferred in duplicate.

That is, the image data management server 8 transfers each detail area (dot units or pixel units) of the specific star's original image 10 so as to insert the corporate advertisement, and performs the transfer in duplicate, so that the users who browse the corporate advertisement can insert the personal information thereof into the detail area in which the corporate advertisement is inserted.

Accordingly, as illustrated in FIG. 9, the company transfers the detail area so that the same corporate advertisement is exposed to the first and second users at the same time, and allows the first and second users to upload the personal information in the detail area.

In addition, the image data management server 8 transfers each detail area (dot units or pixel units) of the specific star's original image 10 so as to insert the corporate advertisement, and performs the transfer in duplicate so as to allow the users who browse the corporate advertisement to insert the personal information thereof into the detail area. At this time, the image data management server 8 may selectively output different corporate advertisements in a limitation manner for each country.

In other words, it is possible to process the individual transfer for the corporate advertisement in the limitation manner for each country.

More specifically, when the personal information registered in the image data management server 8 is company information and the transfer in duplication for individual user is set at the time of browsing the company information, the image data management server 8 receives a corporate information browsing signal from any one of the image data interworking applications 4.

Then, the image data management server 8 inserts the personal information of the user into the company information, and provides the company information to other users so as to be browsed.

When the image data management server 8 receives a browse signal for the same company information from any one of the image data interworking applications 4, the image data management server 8 inserts the personal information of the user into the company information, and provides the company information to other users so as to be browsed.

That is, the company secures a predetermined number of detail areas to upload the corporate advertisement, and then transfers the detail areas to a plurality of users as a browsing reward for the corporate advertisement, such that the plurality of users may upload their personal information to the same detail areas. Accordingly, the image data management server 8 transfers the personal information of the user to the image data interworking application 4 according to which user's image data interworking application 4 is accessed.

Ultimately, the company and users may efficiently consume the advertisement for mutual benefit.

Meanwhile, the image-linked data management system and method according to an embodiment of the present invention are not limited to the above embodiments but may be variously changed without departing from the technical scopes thereof.

### [Description of Reference Numerals]

2: User terminal
4: Image data interworking application
6: Image providing server
8: Image data management server
10: Star's original image
12: Partial area
14: Image grid frame

## Claims

1. An image-linked data management system comprising:
an image data interworking application 4 which is installed in a user terminal 2, and is configured to, when attempting to output personal information 16 of a user included in a star's original image 10, simultaneously receive the star's original image and the personal information 16 from an image data management server 8, and output the same on a screen of the user terminal 2;
an image providing server 6 configured to receive and register a star's original image from an agency, a movie production company, or a picture shooting related company;
the image data management server 8 configured to receive the star's original image from the image providing server 6, store and register the personal information 16 of the user in an area of dot units (or pixel units) forming the star's original image 10, and simultaneously transmit the star's original image and the personal information 16 of the user to the image data interworking application 4 so as to output the same on the screen of the user terminal, when requesting output by the image data interworking application 4.

2. The image-linked data management system according to claim 1, wherein the star's original image 10 includes any one of a star picture or star daily image, movie poster, movie scene data, or broadcast scene data.

3. The image-linked data management system according to claim 1, wherein the dot unit (or the pixel unit) has a single size determined by an image grid frame 14 having a predetermined number of rows and columns.

4. The image-linked data management system according to claim 1, wherein the personal information 16 includes a photograph, text, or moving picture, URL information accessible to such information (the photograph, text, or moving picture), or URL information accessible to a personal communication means.

5. The image-linked data management system according to claim 1, wherein the personal information 16 includes personal SNS information.

6. The image-linked data management system according to claim 1, wherein the image data management server 8 processes so as to form an SNS group or chat group using a plurality of pieces of personal information selected by the users among the plurality of pieces of personal information 16 included in the same star's original image 10.

7. The image-linked data management system according to claim 1, wherein the single size of the dot unit (or the pixel unit) is determined by an increase or decrease in the number of image grid frames 14 having a predetermined number of rows and columns.

8. The image-linked data management system according to claim 1, wherein the image data interworking application 4 transmits a partial area enlargement request signal and a detail area selection signal to the image data management server 8 according to a selection order of the star's original images 10.

9. The image-linked data management system according to claim 1, wherein the image data management server 8 sequentially receives a partial area enlargement request signal and a detail area selection signal for a specific star's original image 10 from the image data interworking application 4, provides data in which the partial area is automatically enlarged, and extracts the personal information matched to the detail area based on the received detail area selection signal.

10. The image-linked data management system according to claim 1, wherein the image data management server 8 receives a specific partial area enlargement request signal and a signal for an enlargement magnification for a specific star's original image 10 received from the image data interworking application 4, such that, since the number of pieces of personal information to be included in the partial area is limited, the image data management server 8 determines whether the personal information is inserted into each partial area according to a grade of the user.

11. The image-linked data management system according to claim 1, wherein, when inputting a selection signal for a specific star's original image 10 and a request signal for enlarging a specific partial area (a body part), the image data interworking application 4 receives a grade of the user allowed to insert the personal information from the image data management server 8.

12. The image-linked data management system according to claim 1, wherein the image data management server 8 is configured so that, when a user who desires to insert the personal information into a worn item which is worn by the star among the specific star's original images 10 has a member grade lower than another user who desires to insert the personal information into a body of the star, the user is allowed to participate in the bidding.

13. The image-linked data management system according to claim 1, wherein the image data management server 8 is configured to sequentially display grades of the users allowed to insert the personal information into each partial area of a specific star's original image 10 by the image data interworking application 4, so as to select the user for inserting the personal information.

14. The image-linked data management system according to claim 1, wherein the image data management server 8 provides fans with a specific star's original image 10 capable of uploading personal information during fan meeting, and when participation of the fans is completed, the image data management server 8 provides a reference link capable of directly accessing their personal information to the image data interworking application 4 of each fan.

15. The image-linked data management system according to claim 1, further comprising: a set-top box management server configured to: manage set-top box information of each user so that the personal information thereof is inserted into information on a broadcast scene or movie scene in conjunction with the image data management server 8, then is selectively enlarged and output; and manage data output through a set-top box.

16. The image-linked data management system according to claim 1, further comprising: a set-top box management server configured to: manage set-top box information of each user so that the personal information thereof is inserted into information on a broadcast scene or movie scene in conjunction with the image data management server 8, and the personal information is selectively enlarged and output by the image data interworking application 4; and manage data output through a set-top box.

17. The image-linked data management system according to claim 1, wherein the image data management server 8 is configured to generate predetermined points every time when any user browses the personal information included in a specific star's original image 10, and accumulate and calculate the generated points for each user.

18. The image-linked data management system according to claim 1, wherein the personal information 16 is replaced with advertisement information.

19. The image-linked data management system according to claim 1, wherein, when a user inputs an authentication number for visiting a movie theater, the image data management server 8 assigns the personal information 16 for a movie poster to the user.

20. The image-linked data management system according to claim 1, wherein, for same specific star's original image 10, the image data management server 8 processes the personal information so as to allow users to exchange the personal information thereof with each other, so that personal information of an original image which is provided to fans by a star includes information of the star, and personal information of an original image provided to the star by the fans includes personal information of each fan.

21. The image-linked data management system according to claim 1, wherein the image data management server 8 processes a specific star's original image 10 so that the personal information of a specific user is distinguished better than the personal information of other users at a specific time.

22. The image-linked data management system according to claim 1, wherein the image data interworking application 4 is operated in conjunction with a personal phone directory of the user, and the image data management server 8 recognizes whether the personal information of an acquaintance is stored in the star's original image 10 by the image data interworking application 4, by using phone number information for each individual information included in the star's original image 10, based on the telephone number of the personal information included in the star's original image 10.

23. The image-linked data management system according to claim 1, wherein, when the star's original image 10 is an offline paper image such as a newspaper, the paper image includes a QR code to be automatically connected to the image data management server 8, so as to request a provision of a digital star's original image 10 and the personal information of the user.

24. The image-linked data management system according to claim 1, wherein a plurality of pieces of information are simultaneously stored in the personal information 16, and the stored pieces of information are sequentially output every time of clicking.

25. The image-linked data management system according to claim 1, wherein the image data management server 8 performs a bidding to insert the personal information into each dot unit (or pixel unit) for each star's original image, and selects a successful bidder allowed to insert the personal information based on results of the bidding.

26. The image-linked data management system according to claim 1, wherein the successful bidder is selected on the basis of an order of the highest bid amount, an order of application, or an order of the highest member grade.

27. The image-linked data management system according to claim 1, wherein the image data management server 8 transfers each detail area (dot units or pixel units) of a specific star's original image 10 so as to insert a corporate advertisement, and performs the transfer in duplicate so as to allow the users who browse the corporate advertisement to insert the personal information thereof into the detail area.

28. The image-linked data management system according to claim 1, wherein the image data management server 8 transfers each detail area (dot units or pixel units) of the specific star's original image 10 so as to insert the corporate advertisement, and performs the transfer in duplicate so as to allow the users who browse the corporate advertisement to insert the personal information thereof into the detail area, and the image data management server 8 selectively outputs different corporate advertisements for each country.

29. The image-linked data management system according to claim 1, wherein the image data management server 8 is configured to manage output of the personal information according to setting whether the user is disclosed.

30. The image-linked data management system according to claim 1, wherein, for the personal information 16 of the user who requested disclosure setting, when satisfying specific enlargement exposure conditions, that is, a predetermined number of browsing signals or more are requested from other users, a predetermined number of preferences (likes) or more are selected, the image data management server 8 enlarges the personal information 16 of the user so as to be exposed in a large size.

31. The image-linked data management system according to claim 1, wherein the image data management server 8 registers and manages the users by dividing into a group of users who desire to be disclosed without any condition, a group of users who desire to be limitedly disclosed within a closed group, and a group of users who desire to be disclosed only to user himself/herself, according to setting whether the user is disclosed.

32. The image-linked data management system according to claim 1, wherein the image data interworking application 4 specifies a predetermined number of pieces of personal information 16 of the user included in the star's original image 10, and the image data management server 8 outputs a chat window in which chatting of users are performed according to the specify of the predetermined number of pieces of personal information 16 of the user in conjunction with the image data interworking application 4.

33. The image-linked data management system according to claim 1, wherein the image data interworking application 4 displays a hot key that allows the user to enlarge and output the personal information thereof with one click while outputting the star's original image 10 on the screen of the user terminal 2.

34. The image-linked data management system according to claim 1, wherein the image data management server 8 includes:
an original image registration unit 22 configured to receive and register a star picture or star daily image, movie poster, movie scene data, or broadcast scene data from the image providing server 6 which provides the star's original image 10;
a personal information registration unit 24 configured to receive and register personal information for each user in order to store personal information in detail areas (dot or pixel units) generated upon enlargement of the star's original image 10;
a matching information management unit 26 configured to register and manage individual personal information of the user in the detail areas for each position of the star's original image 10 by matching with each other;
a dot bidding processer 30 configured to process a bidding to insert the personal information into the detail areas for each position of each star's original image 10;
an application download management unit 32 configured to manage a unique identification number and a phone number of the user terminal by matching with each other so as to allow the user to download and install the image data interworking application 4 in the user terminal 2; and
a controller 42 configured to register the personal information of the user in the detail areas for each position of the star's original image 10 by matching with each other, and when receiving a personal information request signal from the image data interworking application 4 of each user, extract and provide the personal information to the image data interworking application.

35. The image-linked data management system according to claim 1, wherein the image data management server 8 further comprises a member grade management unit 28 configured to assign priorities according to member grades at the time of bidding to insert the personal information into the detail areas for each position of each star's original image 10.

36. The image-linked, data management system according to claim 1, wherein the image data management server 8 further comprises a phone number registration unit 29 for each image configured to register and manage phone numbers of the users for each star's original image 10 in order to confirm presence or absence of acquaintances among users who uploaded the personal information included in the same star's original image 10.

37. The image-linked data management system according to claim 1, wherein the image data management server 8 further comprises a device interworking information management unit 34 configured to, when using broadcast scene data and movie scene data as the star's original image 10, manage set-top box information of each user so that the personal information may be simultaneously output on a TV screen, and manage interworking information on a set-top box management server for managing data output through a set-top box.

38. The image-linked data management system according to claim 1, wherein the image data management server 8 further comprises a phone number-based chat window management unit 36 for each image configured to search for acquaintances who belong to the same star's original image 10 based on telephone numbers of the users so as to create a chat window.

39. The image-linked data management system according to claim 1, wherein the image data management server 8 further comprises a company dot transfer processer 38 configured to process so as to insert a corporate advertisement into the detail areas (dot or pixel units) for each position of the star's original image 10, and insert the personal information of the user into the detail areas when browsing the corporate advertisement by the user.

40. The image-linked data management system according to claim 1, wherein the image data management server 8 further comprises a selective personal information disclosure processer 40 configured to disclose the personal information of the user to all subjects without any condition, only to subjects within a closed group, or only to user himself/herself, according to disclosure setting of the user.

41. The image-linked data management system according to claim 38, wherein the company dot transfer processer 38 performs a transfer in duplicate for the same detail areas (dot or pixel units) of the same star's original image 10.

42. The image-linked data management system according to claim 1, wherein, when the star's original image 10 is an image of a bride and groom, the image data management server 8 generates a unique identification code for the image of the bride and groom, and generates a plurality of detail area codes to be included in the image of the bride and groom, so that the guests or the bride and groom insert personal information of the guests into the image of the bride and groom using the generated unique identification codes.

43. An image-linked data management method comprising the steps of:
a) receiving a selection signal of a specific star's original image 10 from an image data interworking application 4 specified by an image data management server 8;
b) receiving a specific detail area selection signal from the image data interworking application 4 by the image data management server 8;
c) extracting personal information of a user matched to a detail area by the image data management server 8;
d) transmitting the extracted personal information to the image data interworking application 4 by the image data management server 8; and
e) outputting the personal information transmitted to the image data interworking application 4 on a screen of a user terminal together with the star's original image 10.

44. The image-linked data management method according to claim 43, further comprising the steps of: before step a),
f) receiving and registering, by the image data management server 8, personal information 16 for each user transmitted from a user terminal 2;
g) receiving, by the image data management server 8, a personal information insertion request signal for a specific detail area of the specific star's original image 10 from the image data interworking application 4 installed in the user terminal 2;
h) determining, by the image data management server 8, whether the personal information of the user can be inserted into the detail area; and
i) inserting, by the image data management server 8, the personal information 16 of the user into the detail area at a predetermined position thereof within the star's original image 10.

45. The image-linked data management method according to claim 43, further comprising the step of: before step a),
registering, by the image data management server 8, a telephone number of the user by matching with each personal information belonging to each star's original image 10.

46. The image-linked data management method according to claim 43, further comprising the steps of: between step a) and step b),
selecting a predetermined partial area 12 of the star's original image 10 by the user using the image data interworking application; and
automatically enlarging, by the image data management server 8, the partial area and providing the enlarged information to the image data interworking application 4.

47. The image-linked data management method according to claim 43, further comprising the steps of: in step b),
selecting a plurality of pieces of personal information 16 of different users by any one user; and
when requesting a chat, calling each image data interworking application 4 of the users to provide a chat window, by the image data management server 8.

48. The image-linked data management method according to claim 43, wherein in step e), when the personal information is URL information, the image data interworking application 4 outputs information connected to a URL on the screen of the user.

49. The image-linked data management method according to claim 43, further comprising the steps of: after step e),
when receiving a request signal for confirming presence or absence of acquaintances of the specific star's original image 10 from the image data interworking application 4,
comparing, by the image data management server 8, the telephone numbers registered in a telephone directory of the users with the telephone numbers of the users present in each personal information included in the star's original image 10 by communicating with the image data interworking application 4; and
if there is a matched telephone number, transmitting, by the image data management server 8, telephone number information and the personal information matched to the telephone number to the image data interworking application 4.

50. The image-linked data management method according to claim 43, further comprising the steps of: in step a),
when the star's original image 10 is an image printed on a paper, obtaining a QR code printed on the paper by the image data interworking application 4; and
transmitting QR code information to the image data management server 8 by the image data interworking application 4.

51. The image-linked data management method according to claim 43, further comprising the steps of: before step a),
j) receiving, by the image data management server 8, a request signal for disclosing the personal information of the user to all subjects, only to subjects within a closed group, or only to user himself/herself from the user; and
k) registering setting information of disclosure for each user by the image data management server 8,
the step c) further comprises the step of:
I) determining, by the image data management server 8, whether the personal information of the user is disclosed based on a personal information selection signal received from the image data interworking application 4.

52. The image-linked data management method according to claim 44, further comprising the steps of: in step f),
when the star's original image 10 is an image including a first user, and the personal information of a user who requested to be registered by the image data management server 8 is personal information of a second user, assigning unique identification codes to the star's original image 10 and each detail area forming the star's original image 10, by the image data management server 8;
transmitting, by the image data management server 8, the unique identification codes of the respective detail areas to the image data interworking applications 4 of a plurality of the second, third, fourth, ... and Nth users;
receiving, by the image data management server 8, their personal information of the users and the unique identification codes assigned thereto through the image data interworking application 4.
receiving, by the image data management server 8, the personal information of the user from the image data interworking application 4 of the first user; and
simultaneously inputting, by the image data management server 8, the personal information of the first user and the personal information of any other user into the detail areas.

53. The image-linked data management method according to claim 44, further comprising the step of: in step f),
when the personal information of the user who requested to be registered is a plurality of different pieces of personal information of the same user, processing, by the image data management server 8, so as to sequentially output the plurality of pieces of personal information of the user every time of clicking.

54. The image-linked data management method according to claim 44, step h) further comprises the steps of:
providing, by the image data management server 8, bidding conditions (an order of the highest bid amount, an order of application, or an order of the highest member grade) to insert the personal information into each detail area to the image data interworking application 4;
receiving, by the image data management server 8, a signal for bidding from the image data interworking application 4; and
determining, by the image data management server 8, individual information of the user to be inserted into each detail area.

55. The image-linked data management method according to claim 44, further comprising the steps of: in step f),
when the personal information registered in the image data management server 8 is company information and transfer in duplication for individual user is set at the time of browsing the company information, receiving, by the image data management server 8, a corporate information browsing signal from any one of the image data interworking applications 4;
inserting, by the image data management server 8, the personal information of the user into the company information, and providing the company information to other users so as to browse the company information;
receiving, by the image data management server 8, a browsing signal for same company information from any one of the image data interworking applications 4; and
inserting, by the image data management server 8, the personal information of the user into the same company information, and providing the same company information to other users so as to browse the company information;

56. The image-linked data management method according to claim 44, further comprising the steps of: in step f),
if the star's original image 10 to be registered the personal information is broadcast scene information or movie scene information, when registering set-top box information by a user who registered personal information in the broadcast scene information or movie scene information,
receiving, by the image data management server 8, a signal indicating that a broadcast scene or movie scene is output on a TV screen from a set-top box management server;
transmitting, by the image data management server 8, the personal information of the user to the set-top box management server; and
outputting personal information on the TV screen together with the broadcast scene or movie scene by the set-top box management server.

57. The image-linked data management method according to claim 44, step f) further comprises the step of:
when attempting registration of the personal information, allowing, by the image data management server 8, the user to register the personal information thereof when inputting a ticket number after viewing a specific movie.

58. The image-linked data management method according to claim 46, further comprising the steps of:
when enlarging or reducing a partial area 12, calculating, by the image data management server 8, an increase or decrease of the number of pieces of personal information storable in the partial area; and
providing, by the image data management server 8, the number of pieces of personal information that can be stored in the partial area 12 according to the magnification thereof to the image data interworking application 4.
